# EUROPÄISCHE PATENTANMELDUNG

(11) **EP 1 280 036 A2**
(43) Veröffentlichungstag der Anmeldung: **29.01.2003**
(21) Anmeldenummer: 02011743.8
(22) Anmeldetag: 27.05.2002
(51) Int. Cl.: G06F 1/00

(54) **Verfahren und System zur Erstellung kryptographischer Texte oder Dokumente**

(30) Priorität: 26.05.2001 DE 20108861 U; 26.05.2001 DE 10125874; 27.05.2001 DE 10125875; 14.09.2001 DE 10145332; 14.09.2001 DE 20115185 U
(71) Anmelder: Jahn, Hartmut, 36093 Künzell (DE)
(72) Erfinder: Jahn, Hartmut, D-36093. Künzell (DE); Grossmann, Hans-Dieter, D-99100 Töttelstädt (DE)
(74) Vertreter: Stoffregen, Hans-Herbert, Dr. Dipl.-Phys.

(57) **Zusammenfassung**

Die Erfindung bezieht sich auf ein Verfahren und ein System zum Erstellen, Verändern und/oder Löschen von elektronischen Informationen wie Texten und Grafiken, umfassend zumindest ein Editiermittel (20, 23) wie Stift oder Tastatur zum Eingeben, Verändern oder Löschen von Informationen sowie zumindest ein mit dem Editiermittel gekoppeltes Anzeigemittel wie Display zum Anzeigen der Information. Damit geheime Informationen nur von berechtigten Personen editiert werden können ist vorgesehen, dass das Editiermittel (20, 34) benutzerabhängig hierarchisch codierbar ist und dass mit dem Editiermittel (20, 34) eingegebene, veränderte oder gelöschte Information entsprechend der Codierung des Editiermittels (20, 34) codiert ist und ausschließlich durch Benutzer mit gleicher oder höherer Hierarchie veränderbar oder löschbar ist.

## Beschreibung

Die Erfindung bezieht sich auf ein Verfahren und ein System zur Erstellung kryptographischer Texte und/oder Dokumente nach den Oberbegriffen der Ansprüche 1 und 10. Ferner bezieht sich die Erfindung auf ein kryptographisches Dokument in nicht elektronischer Form nach dem Oberbegriff des Anspruchs 15.

Es ist bekannt, elektronisch abgespeicherte und auf einem Anzeigemittel wie Display dargestellte Informationen wie Texte nachträglich mittels eines elektronischen Stiftes zu bearbeiten, indem beispielsweise Randnotizen erstellt werden. Diese Randnotizen sind beim Wiederaufruf des elektronisch abgespeicherten Dokumentes durch sämtliche Benutzer lesbar. Dies ist jedoch bei besonderen Informationen wie beispielsweise Geheiminformationen unerwünscht.

Aus dem Stand der Technik sind Verfahren bekannt, bei denen ein elektronischer Text oder ein auf Papier geschriebener Text verschlüsselt dargestellt oder übermittelt wird. Nach dem Lesen des Textinhaltes bleibt das Trägermedium in der Regel erhalten, und der Text kann durch Unberechtigte entschlüsselt werden.

Die Erfindung zielt auf eine optimale Lösung für die Einhaltung und Durchsetzung der obersten Geheimhaltungsstufen ab. Dies trifft sowohl für Regierungsdokumente mit brisantem Charakter, Nachrichten für Botschafter in bestimmten Krisenzeiten und - situationen und besonders für Geheimdienstmitarbeiter zu.

Die Aufgabe der Erfindung ist es, die Stufen der Geheimhaltung weiter zu verbessern und zu sichern. Es darf für Außenstehende und andere geheimdienstliche Personen sowie für Spionage keine textliche Information möglich sein. Auch gegen Formen der Wirtschaftsspionage kann diese Form der Geheimhaltung angewendet werden. Hier besteht ein sehr großes Betätigungsfeld.

Erfindungsgemäß wird die Aufgabe u. a. durch ein System mit den Merkmalen des Anspruchs 1 sowie durch ein Verfahren mit den Merkmalen des Anspruchs 10 gelöst.

In der weiteren Technisierung gewinnen die elektronischen Mittel zur Nachrichtenübermittlung immer mehr an Bedeutung. Sie geben dem versierten Bearbeiter von Nachrichten vielfältige und ungeahnte Möglichkeiten zur Kommunikation. Das früher mit Spezialstiften in Form von Bleistiften oder Kugelschreibern oder Spezialfarbband auf einer Schreibmaschine dargestellt wurde, kann heute mit elektronischen Mitteln viel schneller, präziser und effektiver gestaltet werden. Es ist vorgesehen, dass das Editiermittel benutzerabhängig hierarchisch codierbar ist, dass mit dem Editiermittel eingegebene, veränderte oder gelöschte Information entsprechend der Codierung des Editiermittels codiert ist und ausschließlich durch Benutzer mit gleicher oder höherer Hierarchie veränderbar oder löschbar ist. Die Funktion des Editiermittels kann automatisch/ (vor)programmiert und/oder sendergesteuert/empfängerspezifisch und/oder selektiv/selektierbar durchgeführt werden.

Insbesondere können vorab definierte selektive Text-(teil)-Löschungen innerhalb der berechtigten Empfängerkreise und vollständige Löschungen für unberechtigte Empfänger erfolgen, wobei berechtigte Empfänger jederzeit feststellen können, welcher Insider wann welche Texte und/oder Hand-Notes geschrieben bzw. ergänzt hat.

Unterschiedliche elektronische Editiermittel wie Spezialstifte können verschiedene Funktionen erfüllen. Diese elektronischen Spezialstifte können äußerlich unterschiedliche Formen haben und damit werden für einen Fachmann auch dementsprechende Funktionen bei deren Nutzung aufgelöst.

Diese Funktionen können einmal eine teilweise oder begrenzte Löschfunktion auslösen. Erst mit einem Spezialstift auf der Empfängerseite kann man die Textpassagen wieder sichtbar machen. Mit einem anderen elektronischen Spezialstift kann man in bestimmten Textpassagen wiederum eine Spezialsicherung durchführen, damit durch fremden Eingriff nichts entstellt werden kann.

Nicht nur in der Form, sondern auch in der Farbe können diese elektronischen Spezialstifte äußerlich gekennzeichnet sein. Das ist auch deswegen notwendig, damit in der Handhabung keine Verwechslungen vorkommen können. Diese elektronischen Spezialstifte können auch die Funktion einer der z. B. F-Tasten auf der Tastatur übernehmen. Eine weitere Möglichkeit der elektronischen Spezialstifte kann auf die Funktion des Bearbeiters hinweisen. Damit werden bei der Bearbeitung auch wesentliche Kompetenzbereiche signalisiert, die auch im Schriftfeld farblich dokumentiert werden. So kann der eingeweihte Empfänger nachvollziehen, von wem er die Schriftstücke erhalten hat, wobei z. B. jedes Security-Member eine eindeutige Code-Nummer K1 (hohe Komandoebene) ... Kn (niedrige Komandoebene) gemäß einer "Kompetenz- bzw. Kommandopyramide" für persönliche Hand-Notes via e-mail erhält.

Bei allen angesprochenen Möglichkeiten können sich bei der Handhabung Fehler einschleichen. Deshalb muss das System vor der Ausführung eines Befehls eine Abfrage generieren, ob der bearbeitete Text gespeichert oder gelöscht werden soll. Dies hängt natürlich in der Regel vom Erfüllungsstand der Aufgabe ab.

Diese elektronischen Datenträger sollen keinen Kontakt zum Internet haben, da sich sonst bei der Übertragung "Hacker" mit einklinken können. Sie können den Text übernehmen und diesen mit modernster Technik entschlüsseln oder einen Computervirus in das System integrieren.

Das elektronische Geheimdokument ist dadurch gekennzeichnet, dass dieses mit elektronischen und kodierten Spezialstiften bearbeitet und erstellt wird (persönlicher Access-Code über Finger-Print digitalisierte Speicherung biometrischer Daten). Vorzugsweise unterscheiden sich die Spezialstifte in Form und Farbe sowie in ihrer Funktion, wobei diese eine Lösch- und/oder Speicherfunktion aufweisen und sollten in der Lage sein, auch farblich Kompetenzbereiche zu kennzeichnen. Insbesondere kann der Empfänger erkennen, wer der Absender war, ohne dass hier Namen im Klartext erscheinen. (Nur Insider-Pool-Members können dem Access-Code konkrete Namen/Personen zuordnen (Member-List)).

Die Vorrichtung zur Erstellung der Geheimdokumente ist des Weiteren dadurch gekennzeichnet, dass auf der Gegenseite ebenfalls mit elektronischen Spezialstiften "gelöschte" Passagen des Textes wieder sichtbar gemacht werden können.

Ferner bezieht sich die Erfindung auf eine Vorrichtung zur Erstellung elektronischer Dokumente, insbesondere einen elektronisch codierten, personengebundenen Schreib- und Signierstift sowie ein dazugehöriger elektronisch kodierter Löschstift ("Radiergummi").

Eine Form von elektronischer Verschlüsselung betrifft die Idee vom elektronisch kodierten, personengebundenen Schreib- und Signierstift sowie den dazugehörige elektronischen Radiergummi. Geräte mit Touch-Screens, sogenannte PAD-Geräte arbeiten bereits mit sogenannten PAD-Stiften, denn auf der Benutzeroberfläche des Touch-Screens sind Sensoren untergebracht, die auf Berührung Funktionen auslösen. Sie übernehmen auch handgeschriebene Texte und modulieren sie bzw. konvertieren diese in eine lesbare und normgerechte Schrift. Die PAD-Stifte können aber nur diese vorgegebenen Funktionen erfüllen. Sie sind alle einheitlich und sind nicht für Codierungen verwendbar.

Eine Erfindung mit eigenständigem erfinderischem Charakter bezieht sich auf ein Medium zur Erstellung eines Geheimdokumentes gemäß den kennzeichnenden Merkmalen des Anspruchs 15. Insbesondere können die Informationen selektiv (empfängerspezifisch) gesteuert (teilweise) gelöscht werden.

Weil es keine absolute Sicherheit gibt, so gibt es unter bestimmten Umständen auch keine absolute Geheimhaltung. Um hier bestimmte "Pannen" von vorn herein zu vermeiden und zu verhindern, dürfen solchen Informationen nur für den Zeitraum des Lesens vorhanden sein. Danach muss ein chemischer Prozess einsetzen, der diese Informationen löscht und sie somit auch nicht mehr zu rekonstruieren sind.

In diese Dokumentation muss auch eine zweite Sicherheitsstufe integriert werden. Sollten vor der textlichen Kenntnisnahme oder gleich danach Kopien abgezogen werden, dann muss dieser Text sofort zerstört bzw. gelöscht werden. Gleiches muss auch beim Versuch eines Faxes geschehen. Auch beim Scannen erfolgt eine Löschung.

Eine weitere Variante ist die Fotokopie. Hier erfolgt beim Einsatz von Blitzlicht ebenfalls eine Löschung des Textes. Beim Fotografieren werden für eine gute Fotoqualität auch gute Lichtverhältnisse benötigt. Jedenfalls beim Einsatz von künstlichem Licht aus kurzer Distanz muss mit einer Fotokopie gerechnet werden. Auch tritt eine Löschreaktion ein.

Es darf in keinem Fall eine Verbreitungsmöglichkeit und damit schriftliche Beweismittel geben.

In der praktischen Vorbereitung solcher Dokumente muss es immer ein Deckblatt (Anschreiben) und ein Arbeitsdokument geben. Beide Blätter werden getrennt hergestellt mit unterschiedlichen chemischen Substanzen behandelt. Das Textblatt kann bis dahin ganz normal textlich bearbeitet werden. Erst wenn das Deckblatt auf das Arbeitsblatt gelegt, wird, wird diese Einheit chemisch "scharf" gemacht. Ein Zerstörungsprozess darf jetzt noch nicht einsetzen. In dieser Einheit wird das komplette Dokument verschickt.

Für Geheimschriften werden bekannte Lösungen von Tannin (Gerberlohe) Kobaltchlorid (Tinte) und optische Aufheller verwendet.

Erst beim Öffnen dieses Dokumentes und der Entfernung des Deckblattes beginnt je nach Textlänge in einer bestimmten Zeit T die Zerstörung des Textes. Durch den chemischen Prozess wird beispielsweise eine Spezialtinte aufgelöst. Bei mehrseitigen Dokumenten steht leider nur ein Deckblatt für die Auslösereaktion zur Verfügung. Damit würde bei den nächsten Seiten keine Löschreaktion einsetzen. In diesem Fall kann auch die Rückseite der Dokumente mit den Chemikalien des Deckblattes behandelt werden. Nur so kann man dann auch die Folgeseiten folgerichtig löschen. Auch andere Varianten sind denkbar.

Ferner sollten auf den erfindungsgemäßen Dokumenten nicht der Hinweis stehen "dieses Dokument löscht sich selbst". Da der Löschvorgang einen chemischen Prozess darstellt, könnten man, wenn die chemische Zusammensetzung des Dokumentes bekannt ist, durch Besprühen mit einer anderen Substanz eine Neutralisation bewirken und der Text würde erhalten bleiben. Dies könnte für die Urheber dieser Dokumente sehr fatal werden. Deshalb haben solchen Hinweise zu unterbleiben.

Vorteilhaft an dieser Erfindung ist, dass diese Idee entsprechend der heute vorhandenen technischen und chemischen Möglichkeiten in die Praxis umgesetzt werden kann. Die Einführung solcher Dokumente wird die Fragen der Geheimhaltung wesentlich verbessern. Diese Erfindung stellt eine besondere und effektive Alternative zu bisher gebräuchlichen Varianten der aktiven Geheimhaltung dar. Solange diese Methode unbekannt ist, solange ist es ein Trumpf in Fragen der Geheimhaltung. Unter dem Aspekt des Datenschutzes hat das Interesse an der Kryptologie ganz erheblich zugenommen. Andererseits bietet der Computer durch die Möglichkeit, große Datenmengen schnell analysieren zu können, auch neue Ansätze zum Brechen von Schlüsseln.

Die Anordnung zur Erstellung des verschlüsselten Textes und/oder Dokumentes kann einerseits in einer elektronischen Variante, d.h. für Geheimdokumente und/oder persönliche Geheimnotizen basierend auf elektronischen Daten und andererseits als physikalisch greifbares Dokument, insbesondere chemisch beschichtetes Papier ausgebildet sein. Dabei ist vorgesehen, dass insbesondere die elektronischen Daten automatisch zeitgesteuert oder sendergesteuert oder empfängergesteuert spezifisch vernichtbar sind.

Weitere Vorteile, Merkmale und Einzelheiten der Erfindung ergeben sich nicht nur aus den Ansprüchen, den diesen zu entnehmenden Merkmalen - für sich und/oder in Kombination -, sondern auch aus den der nachfolgenden Beschreibung zu entnehmenden Ausführungsbeispielen.

Es zeigen:
- Fig. 1: eine Draufsicht auf eine Geheimdokument,
- Fig. 2: eine Draufsicht auf das Geheimdokument mit teilweise abgezogenem Deckblatt,
- Fig. 3: Erstellung eines kryptographischen Textes in elektronischer Form,
- Fig. 4: eine schematische Darstellung eines Schreib- und Signierstiftes,
- Fig. 5: eine schematische Darstellung eines Löschstiftes in Seitenansicht und
- Fig. 6: eine schematische Darstellung des Löschstiftes in Vorderansicht.

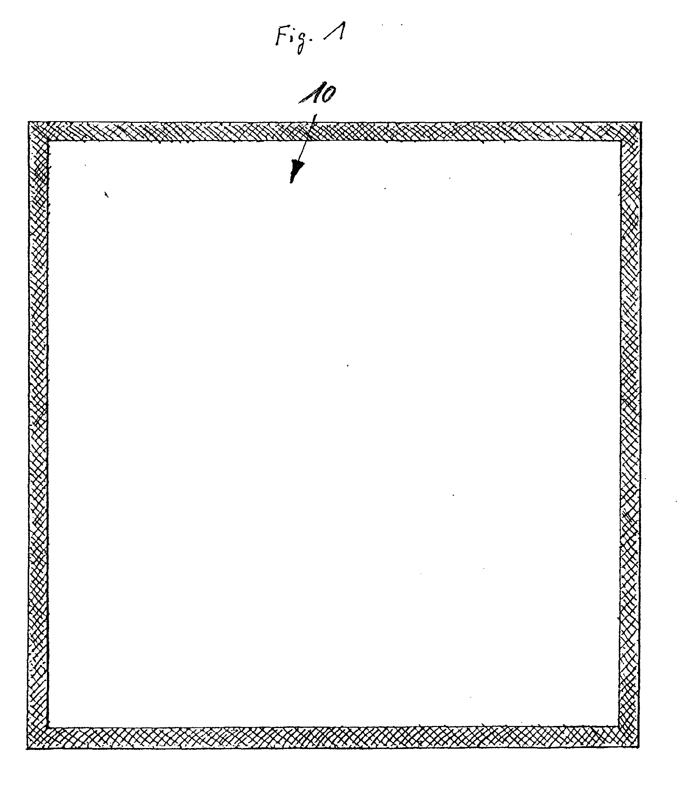

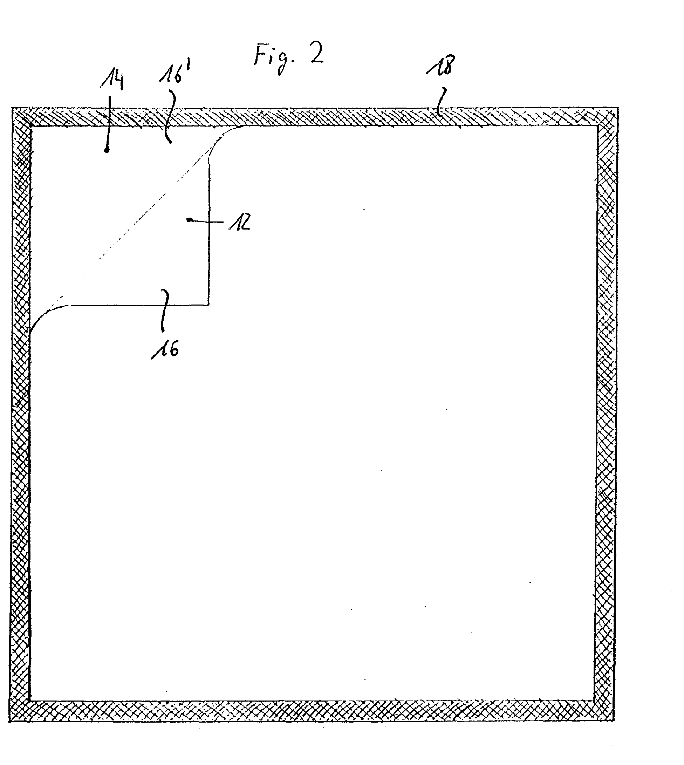

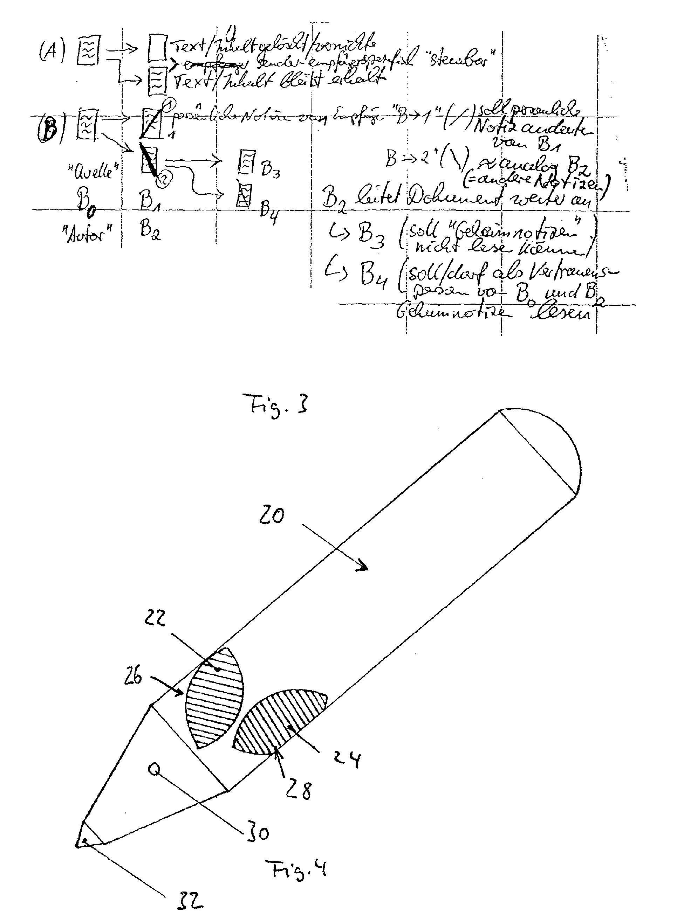

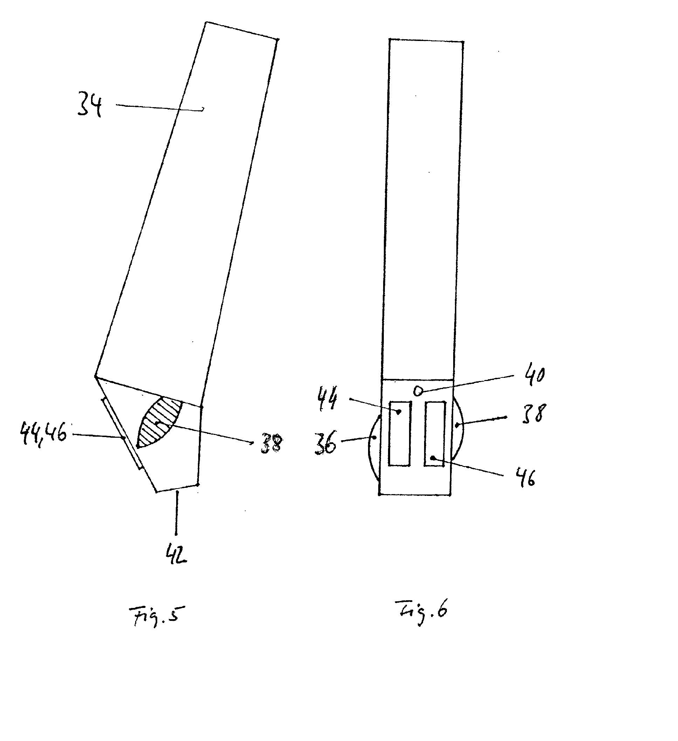

Die Fig. 1 und 2 zeigen ein Geheimdokument 10 bestehend aus einem Deckblatt 12 und zumindest einem Textblatt 14. Das Deckblatt 10 kann in zwei Varianten hergestellt werden. Einmal ist es ein Blatt mit Spezialbeschichtung 16 an der Unterseite und in der zweiten Möglichkeit getränkt mit einer chemischen Substanz.

Das Arbeits- oder auch Textblatt 14 kann in ähnlicher Form wie das Deckblatt 12 hergestellt werden. Natürlich muss die Zusammensetzung der chemischen Substanzen aus anderen Komponenten bestehen, sonst kann der erwünschte Vorgang nicht wie beabsichtigt eingeleitet werden und entsprechend ablaufen.

Bei mehrseitigen Dokumenten muss es ein Textblatt 14' geben, welches auf der Rückseite die gleiche chemische Zusammensetzung wie das Deckblatt 12 aufweist. Damit bei den Folgeblättern der Löschvorgang wie beim ersten Textblatt 14 abläuft. Auch Alternativen sind denkbar. Beispielsweise können auch Zwischenblätter der Variante im Deckblatt 12 zu Einsatz kommen.

Damit es zwischen Deckblatt 12 und Textblatt 14 nicht zum Verrutschen kommen kann und somit vorzeitige Löschvorgänge ausgeschlossen werden, wird vorgeschlagen, dass Außenkanten 18 der Blätterpaare 12,14 ähnlich der PIN-Nummern-Vergabe miteinander verbunden, vorzugsweise gerändelt werden. Diese Variante hat noch einen zweiten Effekt, da man erkennen kann, ob an diesem Dokument schon versucht wurde zu manipulieren. So sollten auch die möglichen Folgeseiten vorbereitet und behandelt werden.

Die Fig. 3 zeigt eine elektronischen Variante der erfindungsgemäßen Anordnung zur Erstellung verschlüsselter Texte, wobei einen Benutzer mit hoher Rechten K1 über sämtliche Rechte verfügt, insbesondere sämtliche Anmerkungen und Texte lesen, verändern und löschen kann, wohingegen ein Benutzer mit geringen Rechten Kn beispielsweise keine Leserrechte erhält.

Ziel der Erfindung ist es, einen bereits bekannten PAD-Stift als Codierstift 20 herzustellen. In Hierarchien und entsprechenden Kommandoebenen sollten diese PAD-Stifte auch Wertigkeitsstufen beinhalten. Nur der Nächsthöhere kann mit "seinem" PAD-Stift Korrekturen im Text vornehmen. Parallel muss das PAD-Gerät mit den unterschiedlichen und wertigkeitsbezogenen Sensoren zur Erfassung biometrischer Daten des berechtigten Insider-Pool-Member ausgestattet sein, damit das System auch in seiner Gesamtheit sämtliche Befehle ausführt. Der Stift 20, der auch einen mehrstufigen Transponder mit Transmitter (Sender) und Responder (Antwortgeber) beinhaltet, muss mit einem Programmiergerät wie beispielsweise Palmtop programmiert werden. Auch für Wartungspersonal kann ganz unkompliziert eine Berechtigung vergeben werden.

Über die Programmierung eines Berechtigungszeitraumes (Zeitfenster zur Berechtigung Access-Time-Window) ist der Zugang zeitlich begrenzbar. Ist ein Verfallsdatum vorgegeben, ist die Nutzung danach nicht mehr möglich. Ein Kopieren scheidet hier aus technischen Gründen aus. Diese Elektronik ist vor Manipulation geschützt. Die Ausbaufähigkeit zu komplexen Netzwerken mit vielen weiteren Funktion wie Protokollierung für anspruchsvolle Anwendungen sind möglich. Damit wäre erst die erste Arbeitsstufe für den Stift 20 freigegeben.

Dieser PAD-Stift entspricht in der ersten Start-Phase beispielsweise der Funktion eines Kraftfahrzeug-Zündschlüssel. Er kann per Druck auf den ersten Sensor das Fahrzeug fernentriegeln und mit dem zweiten Code erst die Zündung ermöglichen und in dem hier beschriebenen Anwendungsbeispiel mit dem Fingerabdruck die Nutzerfreigabe ermöglichen. Das ist der zweite Grundgedanke für die Durchsetzung der klassifizierten Geheimhaltungsstufen. Es erfolgt eine digitalisierte/elektronische Netzwerk-Speicherung der Personen der Kommando-Ebenen K1. Weiter muss der zweite Grundgedanke dahin gerichtet sein, dass auch rein äußerlich für den eingeweihten Fachmann zu erkennen ist, was er für einen codierten PAD-Stift in der Hand hält. Über die äußere Profil- und Farbgebung sollte die Wertigkeit festgelegt werden. Wenn diese Reihenfolge klar ist, kann die personengebundene Codierung erfolgen.

Bei den äußeren Profilen stehen folgende bekannte Varianten wie Rund-, Dreieck-, Quadrat-, Rechteck- und Sechseckprofil zur Verfügung. Diese Profile können sowohl glatt, geriffelt oder gerillt sein. Bei der farblichen Gestaltung sollten die Signalfarben den Vorrang haben, wir Rot, Gelb, Grün und Blau. Auch ein farbliche Schriftgestaltung könnte gleich auf den Bearbeiter hinweisen. Damit verfügt man über ausreichende Möglichkeiten zur Festlegung der Rangfolge. Damit kann jederzeit von der obersten K-Ebene K1 nachvollzogen werden "wer wann was geschrieben hat" .

Damit diese PAD-Stifte nicht von fremder und unbefugter Hand genutzt werden können, ist vorgesehen, dass zunächst eine Abfrage erscheint: Wer bist Du? Diese Frage stellen die meisten Rechner, bevor Sie ihrem Nutzer Zugang zu den Daten verschaffen. Der Stift arbeitet im Wesentlichen wie eine Freund-Feind-Erkennung, d. h. ein IFF-Gerät.

Auch ist eine zuverlässige Zugangskontrolle wichtig, wobei zu beachten ist, dass Passwörter oder Zahlencodes verloren und vergessen werden können. Daher ist ein Zugangscode besser, der nicht vergessen werden kann, wie beispielsweise der eigene Fingerabdruck.

Über Sensoren 22,24 wird ein Fingerabdruck abgetastet und ein Rechner vergleicht die Fingerlinien mit den verschlüsselt gespeicherten. Dafür sind an dem PAD-Stift 20 vorzugsweise zwei Passformen bzw. Anlagestellen 26 und 28 für die Finger vorgesehen, damit eine Abtastung möglich wird. Auch zur Erfassung der Fingertemperatur und/oder Puls/Blutdruck (lebende Finger) und der Plastizität können weitere Sensoren vorgesehen sein. So wird es beim Einsatz von einem Substitut zu keiner Arbeitsfähigkeit kommen. Erst nach vollständiger Übereinstimmung der sicherheitstechnischen Merkmale werden die Arbeitsfunktionen freigegeben und durch eine Leuchtdiode 30 als Kontrollleuchte angezeigt.

Der PAD-Stift 20 muss individuell, insbesondere auch an Linkshänder angepaßt werden - denn in diesem Fall liegt der PAD-Stift 20 entgegengesetzt und er muss trotzdem die ihm zugedachten Funktionen erfüllen können. Die Fingerdaten sind von diesem Führungsgremium (Kommando-Ebene K1) zu speichern.

Da die Finger nie konstant am Stift angelegt werden, darf die Codierung nicht abgeschaltet werden. Es muss ein gewisser Bewegungsraum möglich sein, eine Bewegungstoleranz. Die Sicherung reicht bis tief in das Bios hinein, denn ein Substitut fällt durch seine Starrhaltung sofort auf und wird eine Aktivierung von vorn herein ausschließen.

Vor Beginn der Feststellung der Kompetenzprioritäten sollte ein Organigramm erstellt werden. In diesem Organigramm werden Profil, Farbgestaltung und der einzugebende Code vom Führungskreis festgelegt, bevor alle Geräte "scharf" gemacht werden.

Es muss ein zentraler Systemadministrator beauftragt werden, der für die Registrierung und sporadische Kontrolle der Einhaltung der Sicherheit zuständig ist.

Diese PAD-Stifte sind nur für den Dienstgebrauch und als solche so zu behandeln. Ab einer festgelegten Führungsebene nach unten sind diese Stifte unbedingt nach Dienstschluss unter Verschluss zu bringen. Der dafür vorgesehene Aufbewahrungsbehälter muss ebenfalls ein Substitut erkennen und soll diesen Vorfall registrieren und wie eine Diebstahlwarnanlage eines Kfz reagieren. Somit kann auch eine "undichte Stelle" aufgedeckt werden.

Ein dritter Grundgedanke bezieht sich auf den elektronisch codierten und vorzugsweise personengebundenen Löschstift 34 (Radiergummi). Damit wird das aus Schreibstift 20 Löschstift 34 bestehende Set erst komplett. Mit dem Löschstift können ähnlich einer Löschtaste, aber gezielt ausgewählte Textpassagen gelöscht werden oder ein Text kann elektronisch abgedeckt oder überdeckt werden. Dieser elektronisch codierte Löschstift 34 (Radiergummi) sollten auch hierarchisch abgestuft sein. Der Zugang zum Löschstift 34 analog wie beim PAD-Stift sein.

Ein vierter Grundgedanke äußert sich darin, dass nur der Nächsthöhere mit dem Gerät 34 auch "gelöschtes" oder "abgedecktes" Schriftgut wieder sichtbar machen kann.

Bei Datenübertragung sollte die Gegenstation mit der gleichen Technik ausgestattet sein, damit z.B. die "unsichtbaren" Passagen wieder lesbar werden. Die "Hacker", die nicht über diesen Code verfügen, werden Probleme mit der Entschlüsselung bekommen. Ganz besonders mit einem "leeren" Blatt. Diese "leeren" oder überdeckten Seiten können dann auch mit irreführenden oder belanglosen Texten überschrieben werden, die keinerlei Hinweise auf eine Geheimhaltung beinhalten. Das überdecken kann ähnlich wie beim Windows-System mit der Maus und dem Cursor geschehen. Hier soll es aber mit dem personengebundenen und codierten Löschstift 34 durchgeführt werden.

Eine Enttarnung mit Mouse und Cursor darf nicht möglich sein, da dies nur eine simple Funktion darstellt und dazu der Code fehlt. Der PAD-Stift und der "Radiergummi" werden mit handelsüblichen Stromquellen (Batterien) betrieben.

Bei allen beschriebenen Möglichkeiten können sich bei der Bearbeitung Fehler einschleichen. Deshalb muss das System vor einem nächsten Schritt abfragen, ob der angegebene Text gespeichert oder gelöscht werden soll, wenn es z.B. nur eine Übung war. In der Regel hängt es natürlich nur vom Erfüllungszustand der jeweiligen Aufgabe ab. Diese elektronischen Datenträger sollten bei einem Datentransfer über das ISDN einen zusätzlichen Sicherheitscode haben, weil sich sonst bei der Übertragung "Hacker" mit einklinken könnten. Auf diese Weise könnten Sie die Botschaft übernehmen und diese mit modernster Technik entschlüsseln oder einen Computervirus in dieses System integrieren. Sollte doch eine Übertragung über das Internet erfolgen, dann muss eine unbefugte Datenübernahme elektronisch erkannt werden und es muss der noch nicht übertragene Teil sofort gelöscht werden. Der Löschvorgang sollte bis in das System des Hacker reichen, da diese "Tür" vom Hacker geöffnet wurde. Als Revanche für diesen Eingriff sollte ein für diese Fälle vorbereiteter Computervirus, mit einem "Köder" gespickt, elektronisch schnell nachgeschoben werden.

Im Moment darf nicht der Verdacht aufkommen, dass damit bereits ein wirksamer Gegenschlag geführt wurde. Da man neugierig ist, wird man diese Botschaft untersuchen wollen. Dieser nachgeschobene Computervirus soll ein "Sprinter" sein, damit der "Hacker" oder jene anderen Interessenten anschließend in Problemen schwimmen ("Trojanisches Pferd").

Der Sprinter-Virus sollte sich sehr stark potenzieren können. Die Antivieren-Erkennung und -bekämpfung beim "Hacker" muss mit dem Sprinter-Virus überfordert werden. Die Empfangsstelle muss ebenfalls mit elektronischer Sensorik ausgestattet sein, damit kein Virus übertragen wird. Bei einer Übertragung über das Internet oder eine Standleitung sollte das Material möglichst extrem komprimiert und nach Empfang dekomprimiert werden können. Zusätzlich sollte für eine solche Übertragung immer das schnellste Modem zur Verfügung stehen. Diese Übertragungstechnik gibt es bereits im Internet-Gateway für kleine Betriebe und Heimbüros oder für oben angegebenen Zwecke. Die Art der Verbindung ist vom jeweiligen Benutzer abhängig. Der oder die Rechner können überall an das Telefonnetz angeschlossen werden. Die Datenübertragung mit bis zu 10 Mbit pro Sekunde Ethernet-Geschwindigkeit erfolgt in Höhe bei oberhalb des Sprachbereichs.

Neben der Telefonleitung wäre auch die Verlegung eines günstigen Ethernet-Kabels zu empfehlen, an welches das Gateway auch angeschlossen werden kann. Eine zusätzliche Funkkarte für Gateway und Rechner ermöglicht den drahtlosen Netzzugang als Alternative.

Des Weiteren ist vorgesehen, dass der Löschstift 34 ebenfalls wie der PAD-Stift hierarchisch abgestuft werden wird. Er besitzt ebenfalls Fingerauflageflächen 36, 38 und zum Abtasten der Personenidentifikation und auch eine Leuchtdiode 40 zur Anzeige der Arbeitsbereitschaft. Die Auflagefläche 38 ist für den Daumen und die Auflagefläche 36 ist für den Mittelfinger.

Im unteren Bereich ist ein elektronisches Abtastfenster 42 angeordnet. Das Paar bestehend aus Schreib-Signierstift 20 und Löschstift 34 bildet immer ein Set.

Vorzugsweise ist der Löschstift 34 nach Art eines Strichcodeablesers ausgebildet. Er besitzt zwei vorzugsweise federgelagerte Kippschalter 44,46 an der Vorderfront. Diese werden durch den Zeigefinger bedient. Sie sollen folgende Funktion ausführen:

Mit einem rechten Schalter 44 soll die "Löschfunktion" erfolgen, indem der Schalter 44 nach vorne gekippt wird. Beim Zurückkippen von Schalter 44 muß die "gelöschte" Passage wieder sichtbar werden. Mit Mouse und Cursor ist diese Funktion ausgeschlossen. Der Kippschalter 46 soll nach vorne einzelne Zeilen abdecken und beim Nachhintenkippen wieder sichtbar machen können. Bei der Parallelbedienung (beide Schalter) nach vorne, soll die gesamte Seite abgedeckt werden. Mit der parallelen Bedienung nach hinten muß die gesamte Seite wieder sichtbar werden.

Es ist vorgesehen, dass nur ranghöhere Vorgesetzte mit dem Löschstift 34 bereits gelöschtes, überdecktes oder "abgedecktes" Schriftgut wieder sichtbar machen können. Abgedeckte Seiten sollen mit belanglosen Texten überschrieben und damit abgelenkt werden, zum Beispiel mit fiktiven Terminen, Gratulationen, Einladungen, offenen Pressemitteilungen usw.

Wie bei jeder anderen Computerarbeit sollte das Programm den Bearbeiter nach getaner Arbeit abfragen, ob der Text gespeichert werden soll. Wenn ja, dann aber nur codiert und gesamt mit einem Codewort. Insbesondere sollte der Schreib- und Signier- bzw. Löschstift wie ein IFF-Gerät (Identification Friend and/ or Foe Enemy) Freund-Feind-Erkennung auf elektronischer Basis arbeiten. Ferner ist vorgesehen, dass der Rechner bei einer Datenübertragung eine Sensorik besitzt, die in der Lage ist, unberechtigte Zugriffe festzustellen. Wird so eine Eingriff signalisiert, ist der Text sofort zu löschen, selbst das, was bereits bei einem "Hacker" angekommen ist. Die angewählte Seite muß bei diesem Signal sofort einen Annahmestop elektronisch einleiten.

## Patentansprüche

1. System zum Erstellen, Verändern und/oder Löschen von elektronischen Informationen wie Texten und Grafiken, umfassend zumindest ein Editiermittel (20, 23) wie Stift oder Tastatur zum Eingeben, Verändern oder Löschen von Informationen sowie zumindest ein mit dem Editiermittel gekoppeltes Anzeigemittel wie Display zum Anzeigen der Information,
**dadurch gekennzeichnet,**
**dass** das Editiermittel (20, 34) benutzerabhängig hierarchisch codierbar ist,
**dass** mit dem Editiermittel (20, 34) eingegebene, veränderte oder gelöschte Information entsprechend der Codierung des Editiermittels (20, 34) codiert ist und ausschließlich durch Benutzer mit gleicher oder höherer Hierarchie veränderbar oder löschbar ist.

2. System nach Anspruch 1,
**dadurch gekennzeichnet,**
**dass** das Editiermittel (20, 34) als ein elektronischer Schreibstift und/oder Löschstift ausgebildet ist, umfassend zumindest einen Sensor (22, 24) wie biometrischer Sensor zur Erfassung benutzerabhängiger Daten zur Codierung des Editiermittels (20, 34) sowie zumindest einen Sender/Empfänger zur Übertragung der von dem Sensor erfassten Daten an das Anzeigemittel, sowie vorzugsweise einen Sensor zur Erfassung der auf dem Anzeigemittel wiedergegebenen Information.

3. System nach Anspruch 1 oder 2,
**dadurch gekennzeichnet,**
**dass** das Editiermittel (20, 34) zur besseren visuellen Unterscheidung für bestimmte Benutzergruppen nachfolgende Unterscheidungsmerkmale besitzt, insbesondere dem Profil nach rund, eckig, quadratisch, rechteckig und/oder sechseckig ist, der Oberfläche nach glatt, geriffelt und/oder gerillt ist, der Stiftfarbe nach die Signalfarben blau, rot, gelb und/oder grün aufweist und bei Benutzung auf einem Bildschirm in den Farben blau, rot und/oder grün als "Schreibstiftmine" darstellbar ist.

4. System nach einem oder mehreren der vorhergehenden Ansprüche,
**dadurch gekennzeichnet,**
**dass** das Editiermittel (20, 34) entsprechend bestimmter Benutzerebenen K1 - Kn unterschiedliche Codierungen aufweist.

5. System nach einem oder mehreren der vorhergehenden Ansprüche,
**dadurch gekennzeichnet,**
**dass** bestimmte Aktionen, wie Erstellen von Randnotizen, an eine bestimmte Codierung gebunden sind.

6. System nach einem oder mehreren der vorhergehenden Ansprüche,
**dadurch gekennzeichnet,**
**dass** die Codierung des Editiermittels (20, 34) personengebunden angepasst ist.

7. System nach einem oder mehreren der vorhergehenden Ansprüche,
**dadurch gekennzeichnet,**
**dass** das Editiermittel zumindest eine Auflage mit zumindest einem Sensor (22, 34) zum Abtasten eines anliegenden Fingers wie Zeigefingers oder Daumens aufweist, wodurch eine Personenidentifizierung durchführbar ist.

8. System nach einem oder mehreren der vorhergehenden Ansprüche,
**dadurch gekennzeichnet,**
**dass** der zumindest eine Sensor (22, 34) ein Fingerabdrucksensor und/oder ein Temperatursensor ist.

9. System nach einem oder mehreren der vorhergehenden Ansprüche,
**dadurch gekennzeichnet,**
**dass** bei Übereinstimmung der erfassten Daten mit gespeicherten Daten eine Freigabe der Funktion erfolgt.

10. Verfahren zum Erstellen, Verändern und/oder Löschen von auf einem Anzeigemittel wie Display durch zumindest ein Editiermittel wie Stift oder Tastatur angegebene Informationen, Text oder Grafik,
**dadurch gekennzeichnet,**
**dass** die Editiermittel (20, 34) benutzerspezifisch hierarchisch kodiert werden,
**dass** die von einem Benutzer durchgeführten Editierungen eine bestimmte Hierarchie aufweisen und ausschließlich Benutzern mit gleicher oder höherer Hierarchie angezeigt und von diesen editiert werden können.

11. Verfahren nach Anspruch 10,
**dadurch gekennzeichnet,**
**dass** die durch das Editiermittel eingegebenen Informationen selbst elektronisch codiert sind.

12. Verfahren nach Anspruch 10 oder 11,
**dadurch gekennzeichnet,**
**dass** mit der elektronischen Bearbeitung einer Dokumentation parallel eine elektronische Codierung mit einem in dem Editiermittel enthaltenen Sender erfolgt, wobei vorzugsweise eine Programmierung, d. h. Codierung des Editiermittels erfolgt.

13. Verfahren nach einem der Ansprüche 10 bis 12,
**dadurch gekennzeichnet,**
**dass** vor dem Einsatz des Stiftes ein Organigramm erstellt wird, welches vom Führungsgremium erarbeitet wird, wobei in dem Organigramm die Stifte selektiv zugeordnet und damit Prioritäten geschaffen werden und anschließend die Stifte mit den Daten der zugeordneten Benutzer geladen und/oder nach programmspezifischer Empfänger-Identifizierung transformiert werden.

14. Verfahren nach einem der Ansprüche 10 bis 13,
**dadurch gekennzeichnet,**
**dass** von einem bestimmten Benutzerkreis wie Führungsgremium eine Person beauftragt wird, die für die Registrierung des zuständigen Personenkreises und sporadischen Kontrolle der Einhaltung der Sicherheit verantwortlich ist.

15. Medium (10) zum Speichern von Informationen, insbesondere für Dritte nicht zugänglichen Informationen wie Geheimnachrichten,
**dadurch gekennzeichnet,**
**dass** das Medium (10) als selbstvernichtendes, selbstlöschendes Medium ausgebildet ist.

16. Medium nach Anspruch 15,
**dadurch gekennzeichnet,**
**dass** das Medium (10) ein Textblatt (14) sowie ein Deckblatt (12) umfasst, wobei das Deckblatt (12) an zumindest einer Seite mit einer Spezialschicht (16) behandelt und/oder mit einer chemischen Substanz getränkt ist und wobei mit der Kontaktierung der Blätter (12, 14) eine Reaktion erfolgt.

17. Medium nach Anspruch 15 oder 16,
**dadurch gekennzeichnet,**
**dass** das Textblatt (14) an zumindest einer Unterseite mit einer Spezialschicht (16') behandelt ist und/oder mit einer chemischen Substanz getränkt wird, wobei die Spezialschicht und/oder die chemische Substanz eine andere Zusammensetzung als die des Deckblattes (12) aufweist.

18. Medium nach zumindest einem der vorhergehenden Ansprüchen,
**dadurch gekennzeichnet,**
**dass** das Deckblatt (12) mit dem Textblatt (14) zusammengeführt ist, wobei eine Löschfunktion des auf dem Textblatt entstehenden Textes noch nicht einsetzt.

19. Medium nach zumindest einem der vorhergehenden Ansprüchen,
**dadurch gekennzeichnet,**
**dass** bei der Öffnung des Mediums, d. h. beim Abziehen des Deckblattes (12) von dem Textblatt (14) nach einer Lesezeit T die Information wie Text gelöscht wird.

20. Medium nach zumindest einem der vorhergehenden Ansprüchen,
**dadurch gekennzeichnet,**
**dass** nach dem Löschvorgang eine Rekonstruktion des Textes des Textblattes (14) unmöglich ist.

21. Medium nach zumindest einem der vorhergehenden Ansprüchen,
**dadurch gekennzeichnet,**
**dass** die Spezialschicht (16) bzw. die chemische Substanz leicht flüchtig ist und sich nach Öffnen des Mediums verflüchtigt.

22. Medium nach zumindest einem der vorhergehenden Ansprüchen,
**dadurch gekennzeichnet,**
**dass** die Spezialschicht und/oder chemische Substanz (16) licht- und/oder wärmeunbeständig ist und bei Kontakt mit Licht- und Wärmequellen das Medium eine Reaktion derart ausführt, dass die Information wie Text gelöscht wird.

23. Medium nach zumindest einem der vorhergehenden Ansprüchen,
**dadurch gekennzeichnet,**
**dass** das Deckblatt (12) mit dem Textblatt (14) randseitig verbunden wie gerändelt ist.
